# EUROPEAN PATENT APPLICATION

(11) **EP 2 541 739 A2**
(43) Date of publication of application: **02.01.2013**
(21) Application number: 12173941.1
(22) Date of filing: 27.06.2012
(51) Int. Cl.: H02K 7/02

(54) **Inertial energy storage device and method of assembling same**

(30) Priority: 28.06.2011 US 201113171014
(71) Applicant: General Electric Company, Schenectady, NY 12345 (US)
(72) Inventor: Van Dam, Jeremy Daniel, Niskayuna, NY New York 12309 (US); Vermilyea, Mark Ernest, Niskayuna, NY New York 12309 (US); Haran, Kiruba Sivasubramaniam, Niskayuna, NY New York 12309 (US)
(74) Representative: Williams, Andrew Richard

(57) **Abstract**

An inertial energy storage device (100) includes a plurality of stationary electrical windings (118), a rotatable shaft (112), and a plurality of rotatable magnets (116) coupled to the rotatable shaft. The plurality of stationary electrical windings extend about at least a portion of the plurality of rotatable magnets. The inertial energy storage device also includes a flywheel device (108) that includes a substantially cylindrical hub (602) rotatably coupled to the rotatable shaft. The flywheel device also includes a radially inner ring (608/614) that includes a first material having a first density. The flywheel device further includes a radially outer ring (612/614) that includes a second material having a second density. The first density is greater than the second density.

## Description

### BACKGROUND

The subject matter described herein relates generally to inertial energy storage devices and, more particularly, to a multi-layered flywheel.

At least some known inertial energy storage devices include flywheel devices that rotate at high velocities in excess of 10,000 revolutions per minute (rpm) to store momentum, or inertia, for subsequent energy conversion to electric power. Some of the known flywheels include a unitarily formed radially outer rim coupled to an inner hub. To increase the stored inertia in the flywheels, the radially outer rim is formed with a predetermined thickness to define a predetermined mass. However, the high rotational velocities induce significant stresses within the thick rim. A stress profile defined within the rim typically shows the largest stress magnitudes to be closest to the hub, while the radially outer portions of the rim experience induced stresses that are significantly lower than the radially inner portions. Therefore, the material properties of the outer portions are underutilized compared to the inner portions. Such stresses on the innermost portions of the rim limit the rim thickness, and subsequently limit the inertia available for energy conversion. One measure of the effectiveness of inertial energy storage devices is stored inertia per unit volume taken up by each device. Lower values of inertia per unit volume increase the number of the multiple inertial energy storage devices required to meet large power demands. Increasing the number of devices increases the installation and maintenance costs, including spare part storage costs.

In at least some other known inertial energy storage devices, the known flywheels are assembled with a plurality of concentric layers, or rings, extending radially outward from the hub. Each ring is formed from a substantially similar composite material having substantially similar densities. Also, each ring defines a stress profile that shows that largest stress magnitudes are within the outermost ring, which now becomes the limiting factor with respect to rotational velocities and overall ring thicknesses. Therefore, in known flywheels with layered rings, the outer rings experience induced stresses closer to the material limits than the inner rings, and the inner portions of the flywheel are still being underutilized. Moreover, the maximum inertia per unit volume value is still not attained.

### BRIEF DESCRIPTION OF THE INVENTION

In one aspect, a flywheel device is provided. The flywheel device includes a substantially cylindrical hub. The flywheel device also includes a radially inner ring that includes a first material having a first density. The flywheel device further includes a radially outer ring that includes a second material having a second density. The first density is greater than the second density.

In another aspect, an inertial energy storage device is provided. The inertial energy storage device includes a plurality of stationary electrical windings, a rotatable shaft, and a plurality of rotatable magnets coupled to the rotatable shaft. The plurality of stationary electrical windings extend about at least a portion of the plurality of rotatable magnets. The inertial energy storage device also includes a flywheel device that includes a substantially cylindrical hub rotatably coupled to the rotatable shaft. The flywheel device also includes a radially inner ring including a first material having a first density. The flywheel device further includes a radially outer ring that includes a second material having a second density. The first density is greater than the second density.

In yet another aspect, a method of assembling an inertial energy storage device is provided. The method includes providing a plurality of stationary electrical windings that define a cavity and providing a rotatable shaft. The method also includes fixedly coupling a plurality of rotatable magnets to the rotatable shaft. The method further includes assembling a flywheel device that includes providing a substantially cylindrical hub. The method also includes coupling a radially inner ring to the hub such that the radially inner ring is concentrically disposed about the hub. The radially inner ring includes a first material having a first density. The method further includes coupling a radially outer ring concentrically about the radially inner ring. The radially outer ring includes a second material having a second density. The first density is greater than the second density. The method also includes rotatably coupling the cylindrical hub to the rotatable shaft. The method further includes inserting the rotatable shaft into the cavity such that the plurality of stationary electrical windings extend about at least a portion of the plurality of rotatable magnets.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic view of an exemplary inertial energy storage device;
FIG. 2 is a schematic view of a prior art single-piece, thin rim flywheel device;
FIG. 3 is a graphical view of equivalent stresses induced in the flywheel device shown in FIG. 2;
FIG. 4 is a graphical view of radial stresses induced in the flywheel device shown in FIG. 2;
FIG. 5 is a schematic view of a prior art single-piece, thick rim flywheel device;
FIG. 6 is a graphical view of equivalent stresses induced in the flywheel device shown in FIG. 5;
FIG. 7 is a graphical view of radial stresses induced in the flywheel device shown in FIG. 5;
FIG. 8 is a schematic view of a prior art two-piece, thick rim flywheel device;
FIG. 9 is a graphical view of equivalent stresses induced in the flywheel device shown in FIG. 8;
FIG. 10 is a graphical view of radial stresses induced in the flywheel device shown in FIG. 8;
FIG. 11 is a graphical view of radial stresses induced in a prior art multi-layered flywheel device;
FIG. 12 is a schematic view of an exemplary flywheel device that may be used with the inertial energy storage device shown in FIG.1
FIG. 13 is a graphical view of radial stresses induced in the flywheel device shown in FIG 12; and
FIG. 14 is a flow chart illustrating an exemplary method that may be used in assembling the inertial energy storage device shown in FIG. 1.

Unless otherwise indicated, the drawings provided herein are meant to illustrate key inventive features of the invention. These key inventive features are believed to be applicable in a wide variety of systems comprising one or more embodiments of the invention. As such, the drawings are not meant to include all conventional features known by those of ordinary skill in the art to be required for the practice of the invention.

### DETAILED DESCRIPTION OF THE INVENTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The exemplary systems and methods described herein overcome disadvantages of known flywheel devices and inertial energy storage devices by providing a flywheel device with a configuration including a rotating structure having multiple layers, or rings, formed of differing materials. Such multi-layered functional grading defines a decreasing density gradient extending radially outward from the center of the flywheel device and facilitates uniform radial and hoop stress management. The flywheel device operates at higher speeds with higher rotational inertia than known flywheels. Therefore, compared to known flywheels occupying the same volume, the exemplary flywheels described herein facilitate storage of more inertial energy and an increase in energy density. Moreover, a smaller number of energy storage units are required to attain a large energy storage capacity, thereby facilitating an increased reliability of power supply with lower operating costs than those facilities with additional energy storage devices.

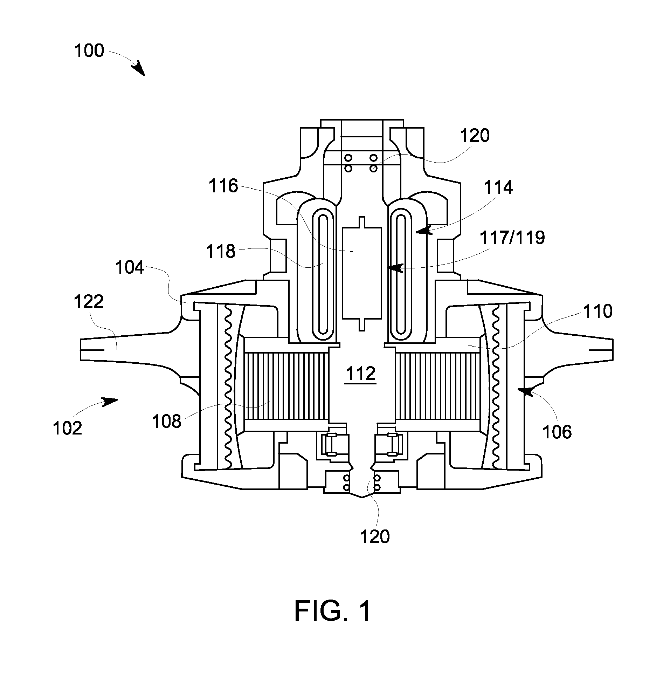

FIG. 1 is a schematic view of an exemplary inertial energy storage device 100. Inertial energy storage device 100 includes a containment system 102. In the exemplary embodiment, containment system 102 includes an outer casing 104 and a plurality of shock absorbing materials 106 concentrically layered radially inward of outer casing 104. Inertial energy storage device 100 also includes a flywheel device 108, described in more detail below, positioned within a flywheel casing 110. Containment system 102 extends about flywheel casing 110. Inertial energy storage device 100 further includes a shaft 112 extending longitudinally through device 100, wherein flywheel device 108 is rotatably coupled to shaft 112. Inertial energy storage device 100 also includes a motor-generator 114 that includes a plurality of rotor magnets 116 coupled to shaft 112 and a plurality of stator windings 118 extending about rotor magnets 116. In the exemplary embodiment, rotor magnets 116 are permanent magnets. Alternatively, rotor windings coupled to an excitation source may be used. Stator windings 118 define a cavity 117 that includes an air gap 119. Also, stator windings 118 are coupled to an electric power source (not shown).

Inertial energy storage device 100 further includes a plurality of magnetic bearings 120 to facilitate radial and longitudinal support and alignment of shaft 112. Inertial energy storage device 100 also includes a passive gimbal system 122 coupled to outer casing 104. Shaft 112 operates with rotational velocities in excess of 30,000 revolutions per minute (rpm). Passive gimbal system 122 facilitates supporting the remaining components of inertial energy storage device 100 compliantly, in contrast to rigidly, during such high-speed operation. Gimbal system 122 is configured to move in a predetermined manner while providing a predetermined support stiffness and damping to reduce detrimental effects of any dynamic instability associated with operation of device 100.

In operation, as flywheel device 108 is initially stationary, stator windings 118 are energized from the electric power source. Motor-generator 114 is motorized and shaft 112 and flywheel device 108 are accelerated to a rotational velocity in excess of 30,000 rpm. Flywheel device 108 stores energy in the form of inertial energy. When electric power from the source to stator windings 118 is interrupted, motor-generator 114 shifts to a generator mode of operation and generates electric power by converting the stored inertial energy into electric energy via rotor magnets 116. Flywheel device 108 decelerates as electric power is generated by conversion of the stored inertial energy.

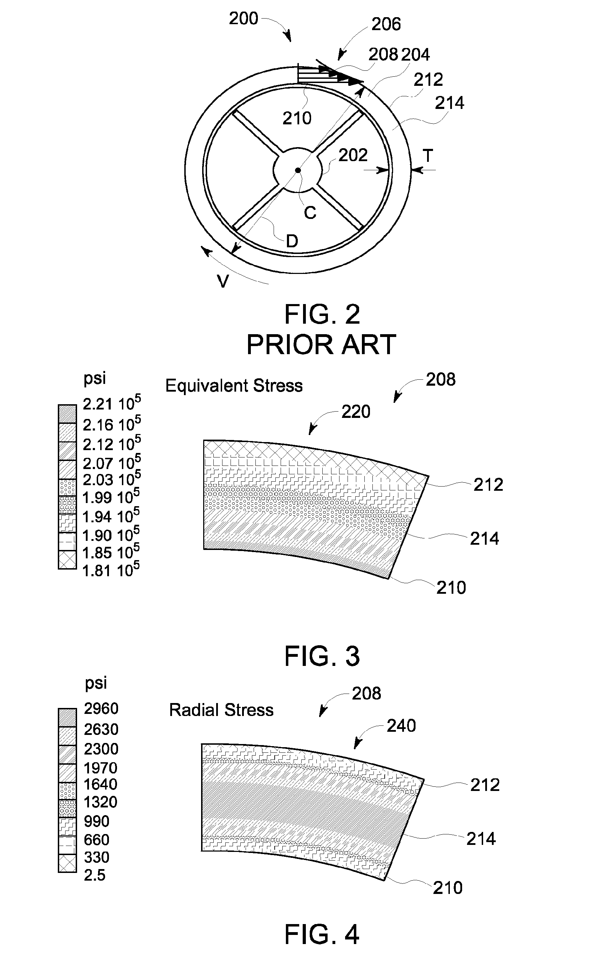

FIG. 2 is a schematic view of a prior art single-piece, thin rim flywheel device 200. FIG. 3 is a graphical view of equivalent stresses 220 induced in flywheel device 200 (shown in FIG. 2). FIG. 4 is a graphical view of radial stresses 240 induced in flywheel device 200 (shown in FIG. 2).

Referring to FIG. 2, device 200 includes a spoked hub 202 coupled to a rim 204. Hub 202 is formed from a metallic substance. Rim 204 is formed from a hoop-wound carbon fiber composite material and is substantially homogeneous. Device 200 has an outer diameter D of approximately 1.4 meters (m) (approximately 4.6 feet (ft)) extending through a rotational center C. Rim 204 is a single ring that has a thickness T of approximately 12.7 centimeters (cm) (approximately 5 inches (in)). Device 200 is configured to rotate with a velocity of approximately 14,000 rpm. During operation of device 200, a stress gradient 206 is induced within rim 204. Stress gradient 206 is partially defined by a peak stress vector 208 induced at a radially innermost portion 210 of rim 204. Peak stress vector 208 is at least partially defined as a function of a rotational velocity V of device 200 and outer diameter D. Moreover, a magnitude of each stress vector within stress gradient 206 is a function of the density of the composite material in the vicinity of a differential element of rim 204 and the position along outer diameter D. Therefore, at least one of outer diameter D, rotational velocity V, and thickness T is defined, i.e., limited by the magnitude of peak stress vector 208. Rim 204 also includes a radially outermost portion 212 and a center portion 214 defined between portions 210 and 212.

Referring to FIG. 3, magnitudes of equivalent stress 220 within rim 204 (shown in FIG. 2) at rated rotational velocity V (shown in FIG. 2) range from approximately 1.24*10⁶ kilopascals (kPa) (approximately 1.81*10⁵ pounds per square inch (psi), i.e., approximately 181 kilopounds (kips) per square inch (ksi)) at radially outermost portion 212 to approximately 1.52*10⁶ kPa (approximately 2.21 * 10⁵ psi, i.e., approximately 221 ksi) at radially innermost portion 210. Equivalent stresses 220 induced within rim 204 include hoop stresses and radial stresses. However, as described further below, the hoop stresses are two to five orders of magnitude greater than the radial stresses. Therefore, equivalent stresses 220 are substantially hoop stress.

Hoop stresses are induced circumferentially, i.e., such hoop stresses act in a direction that is perpendicular to an axial and radial direction. More specifically, hoop stresses associated with rim 204 are induced when the radially inner portion of rim 204 attempts to expand radially outward. However, such outward expansion is restrained by radially adjacent portions of rim 204. Therefore, the radially inner portions of rim 204 experience the forces induced within rim 204 acting on a smaller circumference as a function of distance from the outermost portion of rim 204. Therefore, peak stress vector 208 induced at radially innermost portion 210 (both shown in FIG. 2) has the largest magnitude within stress gradient 206.

Referring to FIG. 4, induced radial stresses 240 act on each ply (not shown) of the composite material of rim 204 (shown in FIG. 2). Typically, a design limit of the magnitude of radial stress is at least partially defined as the delamination stress, beyond which the plies of the composite material may begin to separate. Magnitudes of radial stress 240 within rim 204 at rated rotational velocity V range from approximately 17 kPa (approximately 2.50 psi, i.e., approximately 0.0025 ksi) at radially innermost portion 210 and radially outermost portion 212 to approximately 2*10⁴ kPa (approximately 2,960 psi, i.e., approximately 2.96 ksi) at center portion 214. Therefore, the magnitude of the delamination stress for rim 204 is approximately 2*10⁴ kPa (approximately 2.96 ksi) at center portion 214.

The magnitudes of radial stresses 240 are significantly less than the magnitudes of equivalent stresses 220 (shown in FIG. 3). Therefore, equivalent stresses 220 predominate in stress gradient 206. Also, while inner portion 210 approaches a stress limit, the remainder of rim 204, especially radially outermost portion 212, is relatively under-stressed.

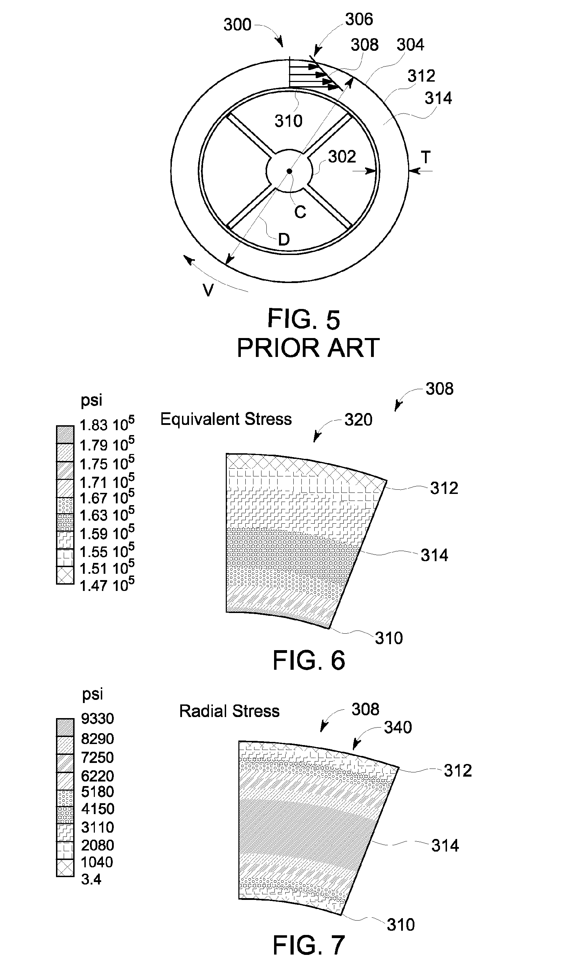

FIG. 5 is a schematic view of a prior art single-piece, thick rim flywheel device 300. FIG. 6 is a graphical view of equivalent stresses 320 induced in flywheel device 300 (shown in FIG. 5). FIG. 7 is a graphical view of radial stresses 340 induced in flywheel device 300 (shown in FIG. 5).

Referring to FIG. 5, device 300 includes a spoked hub 302 coupled to a rim 304. Hub 302 is formed from a metallic substance. Rim 304 is formed from a carbon fiber composite material and is substantially homogeneous. Device 300 has an outer diameter D of approximately 1.4 m (approximately 4.6 ft) extending through a rotational center C. Rim 204 is a single ring that has a thickness T of approximately 25.4 cm (approximately 10 in). Therefore, rim 304 is approximately twice as thick as rim 204 (shown in FIG. 2). Device 300 is configured to rotate with a velocity of approximately 14,000 rpm. During operation of device 300, a stress gradient 306 is induced within rim 304. Stress gradient 306 is partially defined by a peak stress vector 308 induced at a radially innermost portion 310. Peak stress vector 308 is at least partially defined as a function of a rotational velocity V of device 300 and outer diameter D. Moreover, a magnitude of each stress vector within stress gradient 306 is a function of the density of the composite material in the vicinity of a differential element of rim 304 and the position along outer diameter D. Therefore, at least one of outer diameter D, rotational velocity V, and thickness T is defined, i.e., limited by the magnitude of peak stress vector 308. Rim 304 also includes a radially outermost portion 312 and a center portion 314 defined between portions 310 and 312.

Referring to FIG. 6, magnitudes of equivalent stress 320 within rim 304 (shown in FIG. 5) at rated rotational velocity V (shown in FIG. 5) range from approximately 1.01*10⁶ kPa (approximately 1.47*10⁵ psi, i.e., approximately 147 ksi) at radially outermost portion 312 to approximately 1.26*10⁶ kPa (approximately 1.83 * 10⁵ psi, i.e., approximately 183 ksi) at radially innermost portion 210. Equivalent stresses 320 induced within rim 304 are substantially hoop stress. Also, equivalent stresses 320 induced in rim 304 are less than equivalent stresses 220 induced in rim 204 (shown in FIG. 2).

Referring to FIG. 7, induced radial stresses 340 act on each ply (not shown) of the composite material of rim 304 (shown in FIG. 5). Magnitudes of radial stress 340 within rim 304 at rated rotational velocity V range from approximately 23.7 kPa (approximately 3.4 psi, i.e., approximately 0.0034 ksi) at radially innermost portion 310 and radially outermost portion 312 to approximately 6.4*10⁴ kPa (approximately 9,330 psi, i.e., approximately 9.33 ksi) at center portion 314. Therefore, the magnitude of the delamination stress for rim 304 is approximately 6.4*10⁴ kPa (approximately 9.33 ksi) at center portion 314, which is approximately three times the value of the delamination stress for rim 204 at center portion 214 (both shown in FIG. 2).

The magnitudes of radial stresses 340 are significantly less than the magnitudes of equivalent stresses 320 (shown in FIG. 6). Therefore, equivalent stresses 320 predominate in stress gradient 306. Also, while inner portion 310 approaches a stress limit, the remainder of rim 304, especially radially outermost portion 312, is relatively under-stressed.

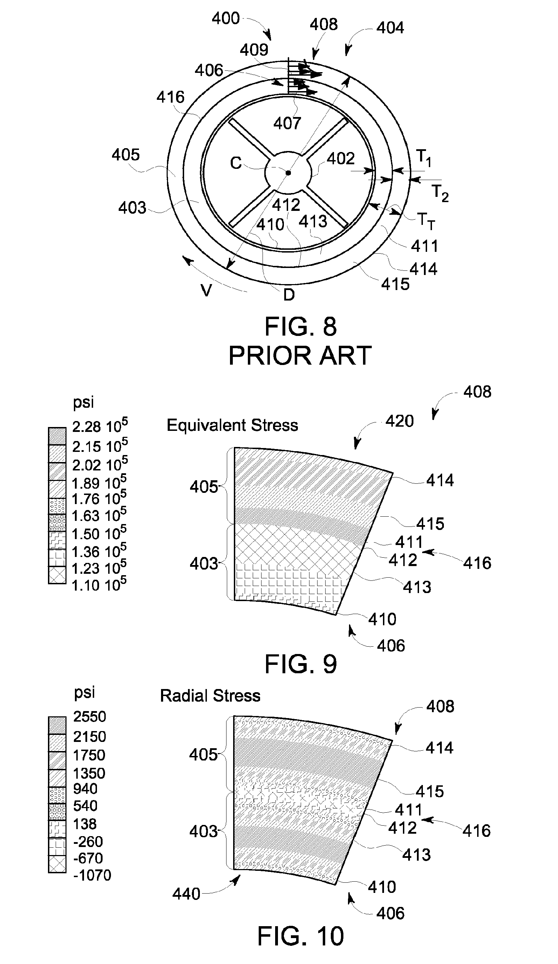

FIG. 8 is a schematic view of a prior art two-piece, thick rim flywheel device 400. FIG. 9 is a graphical view of equivalent stresses 420 induced in flywheel device 400 (shown in FIG. 8). FIG. 10 is a graphical view of radial stresses 440 induced in flywheel device 400 (shown in FIG. 8).

Referring to FIG. 8, device 400 includes a spoked hub 402 coupled to a rim 404. Hub 402 is formed from a metallic substance. Rim 404 includes two concentric rim layers, or rings, i.e., rim inner ring 403 and rim outer ring 405. Both of rings 403 and 405 are formed from a carbon fiber composite material and are substantially homogeneous. Moreover, with respect to composition, rings 403 and 405 are substantially similar. Device 400 has an outer diameter D of approximately 1.4 m (approximately 4.6 ft) extending through a rotational center C. Each of rim inner ring 403 and rim outer ring 405 have a thickness T₁ and T₂ of approximately 12.7 cm (approximately 5 in). Therefore, rim 404 has a total thickness T_{T} of approximately 25.4 cm (approximately 10 in). Rim 404 is approximately twice as thick as rim 204 (shown in FIG. 2) and has a substantially similar thickness as that of rim 304 (shown in FG. 5). Device 400 is configured to rotate with a velocity of approximately 14,000 rpm. During operation of device 400, a stress gradient 406 is induced within rim inner ring 403. Stress gradient 406 is partially defined by a peak stress vector 407 induced at a radially innermost portion 410 of inner ring 403. Also, during operation of device 400, a stress gradient 408 is induced within rim outer ring 405. Stress gradient 408 is partially defined by a peak stress vector 409 induced at a radially innermost portion 411 of outer ring 405. Stress gradient 406 is steeper than stress gradient 408.

The magnitude of peak stress vector 409 is greater than the magnitude of peak stress vector 407. Both of peak stress vectors 407 and 409 are at least partially defined as a function of a rotational velocity V of device 400, the density of the composite material in the vicinity of radially innermost portions 410 and 411, respectively, and the associated positions along outer diameter D. Rotational velocity V and the density of the composite materials for inner and outer rings 403 and 504, respectively, are substantially similar. Therefore, the magnitude of stresses within rings 403 and 405 are mostly a function of the associated distance from rotational center C, extending up to the limits of outer diameter D.

Inner ring 403 also includes a radially outermost portion 412 and a center portion 413. Outer ring 405 includes a radially outermost portion 414 and a center portion 415. Radially outermost portion 412 of inner ring 403 and radially innermost portion 411 of outer ring 405 define an interface 416.

Referring to FIG. 9, magnitudes of equivalent stress 420 within inner ring 403 at rated rotational velocity V (shown in FIG. 8) range from approximately 7.6*10⁵ kPa (approximately 1.10*10⁵ psi, or approximately 110 ksi) at radially innermost portion 410 to approximately 9.65*10⁵ kPa (approximately 1.40 * 10⁵ psi, or approximately 140 ksi) at radially outermost portion 412. Also, induced equivalent stresses 420 within outer ring 405 range from approximately 1.27*10⁶ kPa (approximately 1.85*10⁵ psi, or approximately 185 ksi) at radially outermost portion 414 to approximately 1.56*10⁶ kPa (approximately 2.27 * 10⁵ psi, or approximately 227 ksi) at radially innermost portion 411. Equivalent stresses 420 induced within rim 404 are substantially hoop stress.

Referring to FIGs. 2 through 4 for single-piece, thin rim flywheel device 200, and FIGs. 5 through 7 for single-piece, thick rim flywheel device 300, approximately doubling thickness T (approximately 12.7 cm (5 in)) of device 200 to obtain thickness T (approximately 25.4 cm (10 in)) of device 300 facilitates obtaining approximately three times the radial tensile stress, or delamination stress, therein. For example, at radially outermost portion 212 of rim 204 for device 200, radial tensile stress 240 is approximately 2*10⁴ kPa (approximately 2.9 ksi). In contrast, at radially outermost portion 312 of rim 304 for device 300, radial tensile stress 340 is approximately 6*10⁴ kPa (approximately 9.3 ksi). FIGs. 4 and 7 indicate that such a factor of three is consistent throughout rim 304 for radial stress 340 as compared to rim 204 for radial stress.

In addition, referring to FIGs. 2 through 4 for flywheel device 200, and FIGs. 5 through 7 for flywheel device 300, the largest values of hoop stresses, or equivalent stresses 220 and 320, respectively, are consistently induced near radially innermost portions 210 and 310, respectively. In general, the induced stresses for device 300 are slightly less than 20% lower than those induced stresses for device 200. Therefore, in general, simply doubling the thickness of the rim results in a less than 20% reduction in stress magnitudes.

Referring to FIGs. 2 through 4 for flywheel device 200, FIGs. 5 through 7 for flywheel device 300, and FIGs. 8 through 10 for two-piece, thick rim flywheel device 400, coupled two radially adjacent rings 403 and 405, each having a thickness T of approximately 12.7 cm (5 in) to define a rim 404 of approximately 25.4 cm (10 in) facilitates obtaining radial tensile stresses 440 that are similar in magnitude to stresses 240. Notably, stresses 440 induced within inner ring 403 are significantly less than stresses 440 induced in outer ring 405, rim 204, and rim 304. Therefore, in general, such comparisons suggest that total rim thickness can be increased most effectively using multiple layers. Furthermore, for device 400, peak hoop stress 409 of outer ring 405 is approximately 50% greater than peak hoop stress 407 of inner ring 403. In general, the maximum speed of a rim of a multi-layered flywheel assembly will be limited by the peak hoop stress of the most heavily loaded layer. Therefore, such comparisons suggest that it is desired to have each layer stressed uniformly to the maximum level allowed by the material.

Referring to FIG. 10, induced radial stresses 440 act on each ply (not shown) of the composite materials of inner and outer rings 403 and 405, respectively. Magnitudes of radial stress 440 within inner ring 403 at rated rotational velocity V range from approximately -7.37 kPa (approximately -1,069 psi, or -1.07 ksi) at interface 416 to approximately 1.76*10⁴ kPa (approximately 2,550 psi, or 2.6 ksi) at center portion 413. The negative numbers indicate that the associated radial stress vectors (not shown) are compressive, and oriented in the opposite direction of the non-negative values that are tensile. Also, magnitudes of radial stress 440 within outer ring 40 at rated rotational velocity V range from approximately -7.37 kPa (approximately -1,069 psi, or -1.07 ksi) at interface 416 to approximately 1.76*10⁴ kPa (approximately 2,550 psi, or 2.6 ksi) at center portion 415. Therefore, the magnitude of the delamination stress for inner and outer rings 403 and 405, respectively, is approximately 1.76*10⁴ kPa (approximately 2.6 ksi) at center portions 413 and 415, respectively which is approximately the value of the delamination stress for rim 204 at center portion 214 (both shown in FIG. 2).

The magnitudes of radial stresses 440 are significantly less than the magnitudes of equivalent stresses 420 (shown in FIG. 9). Therefore, equivalent stresses 420 predominate in stress gradients 406 and 408. Also, while inner portion 411 of outer ring 405 approaches a stress limit, the remainder of rim 404, especially radially innermost portion 410 or inner ring 403, is relatively under-stressed.

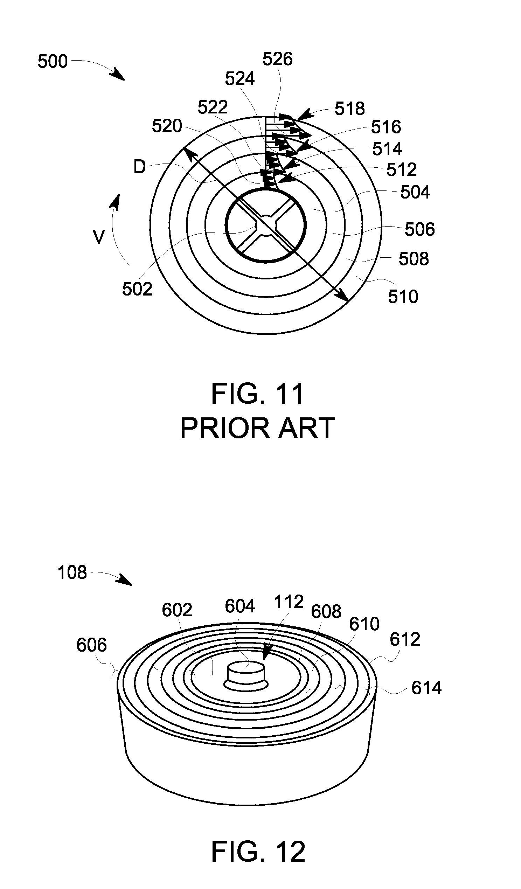

FIG. 11 is a graphical view of stresses induced in a prior art multi-layered flywheel device 500. Device 500 includes a spoked hub 502. Device 500 is similar to device 400 (shown in FIG. 8) with the exception that device 500 includes four layers, or rings, i.e., a first, or innermost ring 504, second ring 506, third ring 508, and a fourth, or outermost, ring 510. All of rings 504 through 510 are formed from a carbon fiber composite material, are substantially homogeneous, and are coupled together. Moreover, with respect to composition, rings 504 through 510 are substantially similar.

During operation of device 500, stress gradients 512, 514, 516, and 518 are induced discretely within rings 504 through 510, respectively. Each of stress gradients 512 through 518 is partially defined by a peak stress vector 520, 522, 524, and 526 respectively. The steepness of each of stress gradients 512 through 518 decreases as a function of increasing distance from hub 502. Moreover, the magnitudes of peak stress vectors 520 through 526 increase as a function of increasing distance from hub 502. Therefore, a rotational velocity V and/or an outer diameter D is limited by the material properties of outermost ring 510. Moreover, rings 504 through 508 are relatively under-stressed and could rotate at a higher rotational velocity V than outermost ring 510 before reaching the same peak stress limit. However, because rings 504 through 510 are coupled together, and inertia is a function of mass and velocity, to increase the inertia of each under-stressed ring, the mass should be increased accordingly.

FIG. 12 is a schematic view of exemplary flywheel device 108 that may be used with inertial energy storage device 100 (shown in FIG.1). In the exemplary embodiment, flywheel device 108 includes a substantially cylindrical hub 602 formed from a metallic material having a hub density. Hub 602 is unitarily formed with a portion 604 of shaft 112. Flywheel device 108 also includes a plurality of rings 606 concentrically disposed about hub 602. Plurality of rings 606 includes a radially innermost ring 608 that is formed from a first material and has a first density. The first density is less than the hub density. The first material may be a composite material including a first plurality of carbon fibers impregnated with a first epoxy substance, wherein the first plurality of carbon fibers is distributed to define the first density. Alternatively, the first material may include at least one metallic substance that is distributed to at least partially define the first density. Also, alternatively, the first material may be any substance or combination of substances that enables operation of flywheel device 108 and inertial energy storage device 100 as described herein. In the exemplary embodiment, radially innermost ring 608 is coupled to hub 602 by an interference fit.

Plurality of rings 606 also includes a second ring 610 that is formed from a second material and has a second density. The first material may be a composite material including a second plurality of carbon fibers impregnated with a second epoxy substance, wherein the second plurality of carbon fibers is distributed to define the second density. The second epoxy substance may be similar to the first epoxy substance. Alternatively, the second material may include at least one metallic substance that is distributed to at least partially define the second density. Also, alternatively, the second material may be any substance or combination of substances that enables operation of flywheel device 108 and inertial energy storage device 100 as described herein. Moreover, the second density is less than the first density. In the exemplary embodiment, second ring 610 is coupled to radially innermost ring 608 by an interference fit.

Plurality of rings 606 further includes a radially outermost ring 612 that is formed from a third material and has a third density. The third material may be a composite material including a third plurality of carbon fibers impregnated with a third epoxy substance, wherein the third plurality of carbon fibers is distributed to define the third density. The third epoxy substance may be similar to the first epoxy substance. Alternatively, the third material may include at least one metallic substance that is distributed to at least partially define the third density. Also, alternatively, the third material may be any substance or combination of substances that enables operation of flywheel device 108 and inertial energy storage device 100 as described herein. Moreover, the third density is less than the second density.

Plurality of rings 606 also includes a plurality of intermediate rings 614, wherein each of rings is similar to rings 608, 610, and 612 with the exception of the materials and their associated densities. The materials and their associated densities for intermediate rings 614 are predetermined to cooperate with rings 608, 610, and 612 to enable a multi-layered functional grading by defining a decreasing density gradient extending radially outward from hub 602 to radially outermost ring 612. Each ring of the plurality of intermediate rings 614 may be a composite material including a predetermined plurality of carbon fibers impregnated with a predetermined epoxy substance, wherein the predetermined plurality of carbon fibers is distributed to define the predetermined densities of each intermediate ring 614. Alternatively, each ring of the plurality of intermediate rings 614 may include a material that includes at least one metallic substance that is distributed to at least partially define the intermediate densities. Also, alternatively, the plurality of intermediate rings 614 may include any substance or combination of substances that enables operation of flywheel device 108 and inertial energy storage device 100 as described herein. In the exemplary embodiment, each ring of the plurality of rings 606 is coupled to each adjacent ring by an interference fit. In the exemplary embodiment, flywheel device 108 includes seven rings 606. Alternatively, flywheel device 108 includes any number of rings 606 that enables operation of flywheel device 108 and inertial energy storage device 100 as described herein.

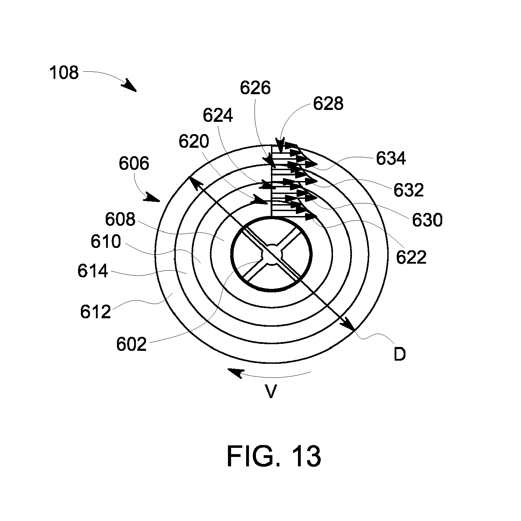

FIG. 13 is a graphical view of radial stresses 650 induced in flywheel device 108. Only four rings 606, and more specifically, only one intermediate ring 614 are/is shown for clarity. As described above, each of rings 606 closer to hub 602 have a higher density than an adjacent radially outer ring 606. Radially innermost ring 608 has a density that is greater than that of second ring 610, but less than that of hub 602. During operation of flywheel device 108, a stress gradient 620 is induced within radially innermost ring 608. Stress gradient 620 is partially defined by a peak stress vector 622 induced within radially innermost ring 608 as described above.

Similarly, during operation of flywheel device 108, stress gradients 624, 626, and 628 are induced discretely in second ring 610, intermediate ring 614, and radially outermost ring 612. Each of stress gradients 624, 626, and 628 is partially defined by a peak stress vector 630, 632, and 634 respectively. The steepness of each of stress gradients 620, 624, 626, and 618 is substantially similar regardless of increasing distance from hub 602. Moreover, the magnitudes of peak stress vectors 622, 630, 632, and 624 are substantially similar regardless of increasing distance from hub 602. Therefore, all rings 606 may be stressed to predetermined limits substantially uniformly, therefore a plurality of rings 606 will not be significantly under-stressed.

Moreover, a rotational velocity V and/or an outer diameter D is not limited by the material properties of any one ring 606, but such speed V and diameter D limits are substantially the same for all rings 606. Therefore, rings 606 could rotate at a similar rotational velocity V with a great average density to increase the inertia of flywheel device 108. Furthermore, the thickness of rings 606 may be determined such that the maximum allowable hoop stress associated with the predetermined materials is attained at a predetermined speed. Therefore, for a given volume, the increased total inertia increases the energy that can be stored in the given space.

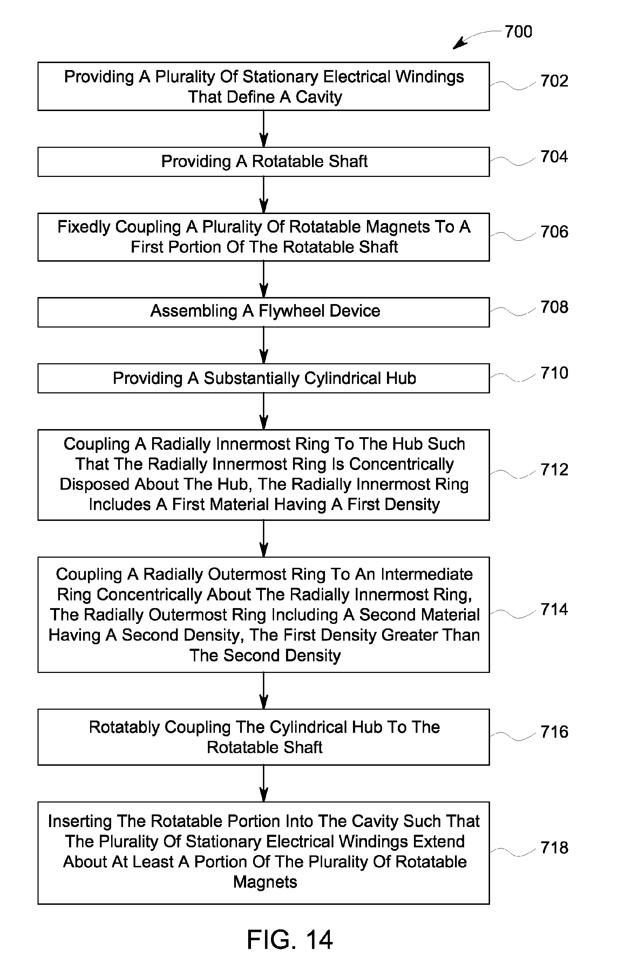

FIG. 14 is a flow chart illustrating an exemplary method that may be used in assembling inertial energy storage device 100 (shown in FIG. 1). In the exemplary embodiment a plurality of stationary electrical windings, i.e., stator windings 118 (shown in FIG. 1), are provided 702 that define a cavity 117 (shown in FIG. 1). A rotatable shaft 112 (shown in FIG. 1) is provided 704 and rotatable magnets, i.e., rotor magnets 116 (shown in FIG. 1) are fixedly coupled 706 to rotatable shaft 112. Flywheel device 108 is assembled 708 by providing 710 substantially cylindrical hub 602 (shown in FIG. 12). Radially innermost ring 608 (shown in FIG. 12) is coupled 712 to hub 602 such that radially innermost ring 608 is concentrically disposed about hub 602. Radially innermost ring 608 includes a first material having a first density. Radially outermost ring 612 (shown in FIG. 12) is coupled 714 to an intermediate ring 614 concentrically about radially innermost ring 608. Radially outermost ring 612 includes a second material having a second density. The first density is greater than the second density. Cylindrical hub 602 is rotatably coupled 716 to rotatable shaft 112, and rotatable shaft 112 is inserted 718 into cavity 117 such that stator windings 118 extend about at least a portion of rotor magnets 116.

The above-described flywheel device for an inertial energy storage device provides a cost effective and reliable method for increasing an energy storage capability of such devices. Specifically, the devices described herein include a rotating structure having multiple layers, or rings formed of differing materials. Such multi-layered functional grading defines a decreasing density gradient extending radially outward from the center of the flywheel device and facilitates uniform radial and hoop stress management for each layer. Therefore, the exemplary flywheels described herein facilitate storage of increased inertial energy and facilitate an increase in energy storage density. Moreover, a smaller number of energy storage units are required to attain a large energy storage capacity, thereby facilitating an increased reliability of power supply with lower installation and operating costs.

Exemplary embodiments of systems and methods for flywheel devices for inertial energy storage devices are described above in detail. The system and methods are not limited to the specific embodiments described herein, but rather, components of systems and/or steps of the method may be utilized independently and separately from other components and/or steps described herein. For example, the systems and methods may also be used in combination with other rotary systems and methods, and are not limited to practice with only the flywheel devices for inertial energy storage devices as described herein. Rather, the exemplary embodiment can be implemented and utilized in connection with many other rotary system applications.

Although specific features of various embodiments of the invention may be shown in some drawings and not in others, this is for convenience only. Moreover, references to "one embodiment" in the above description are not intended to be interpreted as excluding the existence of additional embodiments that also incorporate the recited features. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the invention are indicated in the following clauses:
1. A flywheel device comprising:
   a substantially cylindrical hub;
   a radially inner ring comprising a first material having a first density; and
   a radially outer ring comprising a second material having a second density, the first density greater than the second density.
2. The flywheel device in accordance with Clause 1, wherein said hub comprises a third material having a third density, the third density greater than the first density.
3. The flywheel device in accordance with Clause 2, wherein said hub comprises a metallic material.
4. The flywheel device in accordance with Clause 1, wherein said first material comprises a first plurality of carbon fibers impregnated with a first epoxy substance, said first plurality of carbon fibers distributed to define the first density, and said second material comprises a second plurality of carbon fibers impregnated with a second epoxy substance, said second plurality of carbon fibers distributed to define the second density.
5. The flywheel device in accordance with Clause 1, wherein said first material comprises at least one metallic substance distributed to at least partially define the first density, and said second material comprises a plurality of carbon fibers impregnated with an epoxy substance, said plurality of carbon fibers distributed to define the second density.
6. The flywheel device in accordance with Clause 1, further comprising at least one intermediate ring positioned between said radially inner ring and said radially outer ring, said at least one intermediate ring comprising a material having a density that at least partially defines a decreasing density gradient extending radially outward from said hub to said radially outer ring.
7. The flywheel device in accordance with Clause 6, wherein said radially inner ring is coupled to said hub by an interference fit, and each said ring is coupled to each adjacent ring by an interference fit.
8. An inertial energy storage device comprising:
   a plurality of stationary electrical windings;
   a rotatable shaft;
   a plurality of rotatable magnets coupled to said rotatable shaft, wherein said plurality of stationary electrical windings extend about at least a portion of said plurality of rotatable magnets; and
   a flywheel device comprising:
      a substantially cylindrical hub rotatably coupled to said rotatable shaft;
      a radially inner ring comprising a first material having a first density; and
      a radially outer ring comprising a second material having a second density, the first density greater than the second density.
9. The inertial energy storage device in accordance with Clause 8, wherein said hub comprises a third material having a third density, the third density greater than the first density.
10. The inertial energy storage device in accordance with Clause 9, wherein said hub comprises a metallic material.
11. The inertial energy storage device in accordance with Clause 8, wherein said first material comprises a first plurality of carbon fibers impregnated with a first epoxy substance, said first plurality of carbon fibers distributed to define the first density, and said second material comprises a second plurality of carbon fibers impregnated with a second epoxy substance, said second plurality of carbon fibers distributed to define the second density.
12. The inertial energy storage device in accordance with Clause 8, wherein said first material comprises at least one metallic substance distributed to at least partially define the first density, and said second material comprises a plurality of carbon fibers impregnated with an epoxy substance, said plurality of carbon fibers distributed to define the second density.
13. The inertial energy storage device in accordance with Clause 8, wherein said flywheel device further comprises at least one intermediate ring positioned between said radially inner ring and said radially outer ring, said at least one intermediate ring comprising a material having a density that at least partially defines a decreasing density gradient extending radially outward from said hub to said radially outer ring.
14. The inertial energy storage device in accordance with Clause 13, wherein said radially inner ring is coupled to said hub by an interference fit, and each of said rings is coupled to each adjacent ring by an interference fit.
15. A method of assembling an inertial energy storage device, said method comprising:
   providing a plurality of stationary electrical windings that define a cavity;
   providing a rotatable shaft;
   fixedly coupling a plurality of rotatable magnets to the rotatable shaft;
   assembling a flywheel device comprising:
      providing a substantially cylindrical hub;
      coupling a radially inner ring to the hub such that the radially inner ring is concentrically disposed about the hub, the radially inner ring includes a first material having a first density; and
      coupling a radially outer ring concentrically about the radially inner ring, the radially outer ring including a second material having a second density, the first density greater than the second density;
      rotatably coupling the cylindrical hub to the rotatable shaft; and
      inserting the rotatable shaft into the cavity such that the plurality of stationary electrical windings extend about at least a portion of the plurality of rotatable magnets.
16. A method in accordance with Clause 16, wherein providing a substantially cylindrical hub comprises forming the hub from a third material having a third density, the third density greater than the first density.
17. A method in accordance with Clause 16, wherein coupling a radially inner ring to the hub comprises forming the radially inner ring with a first plurality of carbon fibers impregnated with a first epoxy substance, the first plurality of carbon fibers distributed to define the first density, and coupling a radially outer ring concentrically about the radially inner ring comprises forming the radially outer ring from a second plurality of carbon fibers impregnated with a second epoxy substance, the second plurality of carbon fibers distributed to define the second density.
18. A method in accordance with Clause 16, wherein coupling a radially inner ring to the hub comprises forming the radially inner ring with at least one metallic substance distributed to at least partially define the first density, and coupling a radially outer ring concentrically about the radially inner ring comprises forming the radially outer ring from a plurality of carbon fibers impregnated with an epoxy substance, the plurality of carbon fibers distributed to define the second density.
19. A method in accordance with Clause 16 further comprising positioning at least one intermediate ring between the radially inner ring and the radially outer ring, wherein the at least one intermediate ring is formed from a material having a density that at least partially defines a decreasing density gradient extending radially outward from the hub to the radially outer ring.
20. A method in accordance with Clause 19, wherein coupling a radially inner ring to the hub comprises using an interference fit, and coupling a radially outer ring concentrically about the radially inner ring and positioning at least one intermediate ring between the radially inner ring and the radially outer ring comprises using an interference fit.

## Claims

1. A flywheel device (108) comprising:
a substantially cylindrical hub (602);
a radially inner ring (608/614) comprising a first material having a first density; and
a radially outer ring (612/614) comprising a second material having a second density, the first density greater than the second density.

2. The flywheel device (108) in accordance with Claim 1, wherein said hub (602) comprises a third material having a third density, the third density greater than the first density.

3. The flywheel device (108) in accordance with either of Claim 1 or 2, wherein said hub (602) comprises a metallic material.

4. The flywheel device (108) in accordance with either of Claim 1 or 2, wherein said first material comprises a first plurality of carbon fibers impregnated with a first epoxy substance, said first plurality of carbon fibers distributed to define the first density, and said second material comprises a second plurality of carbon fibers impregnated with a second epoxy substance, said second plurality of carbon fibers distributed to define the second density.

5. The flywheel device (108) in accordance with any preceding Claim, wherein said first material comprises at least one metallic substance distributed to at least partially define the first density, and said second material comprises a plurality of carbon fibers impregnated with an epoxy substance, said plurality of carbon fibers distributed to define the second density.

6. The flywheel device (108) in accordance with Claim 1, further comprising at least one intermediate ring (614) positioned between said radially inner ring (608) and said radially outer ring (612), said at least one intermediate ring comprising a material having a density that at least partially defines a decreasing density gradient extending radially outward from said hub (602) to said radially outer ring.

7. The flywheel device (108) in accordance with Claim 6, wherein said radially inner ring (608) is coupled to said hub (602) by an interference fit, and each said ring (608/612/614) is coupled to each adjacent ring by an interference fit.

8. An inertial energy storage device (100) comprising:
a plurality of stationary electrical windings (118);
a rotatable shaft (112);
a plurality of rotatable magnets (116) coupled to said rotatable shaft, wherein said plurality of stationary electrical windings extend about at least a portion of said plurality of rotatable magnets; and
a flywheel device (108) comprising:
a substantially cylindrical hub (602) rotatably coupled to said rotatable shaft;
a radially inner ring (608/614) comprising a first material having a first density; and
a radially outer ring (612/614) comprising a second material having a second density, the first density greater than the second density.

9. The inertial energy storage device (1000 in accordance with Claim 8, wherein said hub (602) comprises a third material having a third density, the third density greater than the first density.

10. The inertial energy storage device (100) in accordance with Claim 9, wherein said hub comprises a metallic material.
